Europäisches Patentamt

European Patent Office

Office européen des brevets

(11) Publication number: **0 435 002 A1**

(12) **EUROPEAN PATENT APPLICATION**

(21) Application number: 90122746.2

(22) Date of filing: 28.11.90

(51) Int. Cl.5: **C03C 8/24**, C03C 3/072

(30) Priority: **29.11.89 JP 309647/89**

(43) Date of publication of application:
**03.07.91 Bulletin 91/27**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Mizuno, Yasuo**
**67-1-105, Ikaganishi-machi**
**Hirakata-shi, Osaka-fu(JP)**
Inventor: **Ikeda, Masaki**
**37-15, Yamadaike Higashi-machi**
**Hirakata-shi, Osaka-fu(JP)**
Inventor: **Yoshida, Akihiko**
**19-13, Yamanote-cho, Korien**
**Hirakata-shi, Osaka-fu(JP)**

(74) Representative: **Eisenführ, Speiser & Strasse**
**Martinistrasse 24**
**W-2800 Bremen 1(DE)**

(54) Sealing glass and magnetic head comprising the same.

(57) A sealing glass which comprises 10 to 25 % by weight of $SiO_2$, 55 to 80 % by weight of PbO, 1 to 15 % by weight of CdO, 0 to 10 % by weight of $B_2O_3$, 0 to 5 % by weight of ZnO, 0 to 5 % by weight of $Al_2O_3$, 0 to 5 % by weight of $Na_2O$ and 0 to 10 % by weight of $K_2O$ provided that a total content of $Na_2O$ and $K_2O$ does not exceed 10 % by weight, which has a coefficient for thermal expansion close to that of superstructural nitride alloy and improved water resistance and is suitable for sealing a magnetic head.

Fig.IA

Fig.IB

Fig.IC

Fig.ID

Fig.IE

Fig.IF

Fig.IG

Fig.IH

Fig.II

Fig.IJ

Fig.IK

## SEALING GLASS AND MAGNETIC HEAD COMPRISING THE SAME

## BACKGROUND OF THE INVENTION

### Field of the Invention

The present invention relates to a sealing glass which is used in electronic parts, magnetic heads quartz oscillators, etc. and a magnetic head comprising the same.

### Description of the Related Art

With the progress of electronics, need for various kinds of glass has been increased.

The use of a sealing glass will be explained by making reference to a sealing glass for a magnetic head. Figs. 1A to 1K illustrate a typical process for producing a magnetic head.

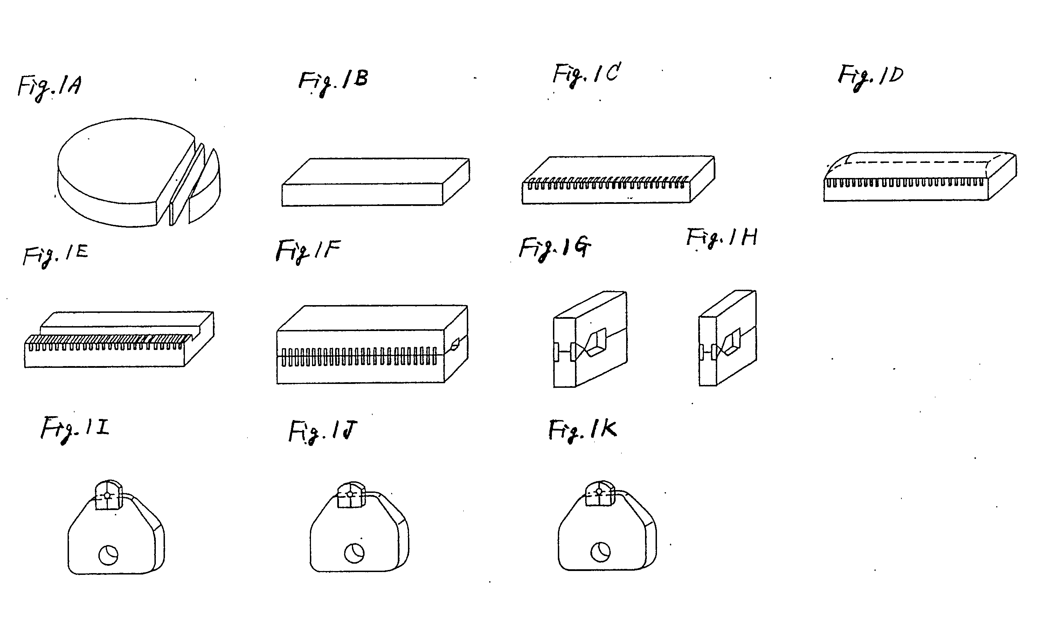

First, a piece of ferrite is cut out from an ingot of ferrite (Fig. 1A). The piece of ferrite is abrased to form a rod having a suitable shape and size (Fig. 1B). As shown in Fig. 1C, grooves are formed by track processing. Over the grooves, a glass is molded (Fig. 1D) and excessive glass is removed by abrasing. After forming a groove for coiling, a gap surface is abrased (Fig. 1E). Then, a gap glass is sputtered on a bonding surface and a pair of ferrite pieces are bonded to form a gap (Fig. 1F). The bonded pieces are cut to form a chip (Fig. 1G) and sides of the chip are abrased to a suitable thickness (Fig. 1H). The chip is then adhered to a base (Fig. 1I), and a tape flying face is abrased (Fig. 1J). Finally, a wire is wound to finish a magnetic head (Fig. 1K).

As a material for the magnetic head, the ferrite has been most widely used. However, since the ferrite has a small saturation magnetic flux density, the magnetic head comprising the ferrite cannot be used in combination with a a high density recording medium such as a metal tape which has recently been developed because of magnetic saturation of the magnetic head. Then, as a substitute magnetic material for the ferrite, an amorphous alloy is developed and used for the production of a magnetic head which is assembled in a VTR used in broad casing stations or an S-VHS type VTR. For producing the magnetic head comprising the amorphous alloy, the amorphous alloy is sputtered between the steps of Figs. 1B and 1C. However, since the amorphous alloy tends to be easily crystallized, a working temperature of the sealing glass used for assembling the magnetic head should be $500\,^{\circ}$C or lower. To this end, a sealing glass containing a very large amount of PbO is used. In general such glass has small strength and poor water resistance.

Then, a superstructural nitride alloy as a substitute for the amorphous alloy has been invented (see, for example, the Technical Study Reports of the Electronics, Information and Communication Society, MR-86-4, 87-14). Since the superstructural nitride alloy has a coefficient of thermal expansion of $105 \pm 5 \times 10^{-7}/^{\circ}$C (30 to $300\,^{\circ}$C) and a crystallization temperature of $600\,^{\circ}$C or higher, the sealing glass containing a smaller amount of PbO can be used. Therefore, the strength and water resistance of the sealing glass are expected to be improved.

However, conventional glasses which can be processed at a temperature of $600\,^{\circ}$C or higher are not suitable as sealing glasses for the magnetic head. For example, Japanese Patent Kokai Publication No. 501732/1983 discloses a glass which contains 62 to 72 % by weight of PbO and has a working temperature of $530\,^{\circ}$C. But, its coefficient of thermal expansion is as small as $87 \times 10^{-7}/^{\circ}$C, it has poor water resistance because of the presence of $PbF_2$, it is easily devitrified because of the presence of $TiO_2$, and it is colored in dark brown because of the presence of $V_2O_5$.

Japanese Patent Kokai Publication No. 146951/1984 discloses a glass which contains 70 to 74 % by weight of PbO, and has a viscosity of $10^6$ poises at $600\,^{\circ}$C or lower and a coefficient of thermal expansion of 83 to $93 \times 10^{-7}/^{\circ}$C. Since, in general, the sealing glass should have a viscosity in the order of $10^4$ poises at the working temperature, the working temperature of this glass exceeds $600\,^{\circ}$C. In addition, the coefficient of thermal expansion is small.

Japanese Patent Kokai Publication No. 195552/1984 discloses a glass for thick coating a circuit which contains 65 to 75 % by weight of PbO, and has a baking temperature of $560\,^{\circ}$C or lower and a coefficient of thermal expansion of 65 to $85 \times 10^{-7}/^{\circ}$C. This glass has the small coefficient of thermal expansion and is colored in dark green because of the presence of $Cr_2O_3$.

Japanese Patent Kokai Publication No. 170240/1988 discloses a glass which contains 45 to 60 % by weight of PbO, and has a working temperature of $550\,^{\circ}$C and a coefficient of thermal expansion of 119 to $126 \times 10^{-7}/^{\circ}$C. Since this glass contains a comparatively large amount (5 % by weight or more) of $Na_2O$ ,

it has poor water resistance. In addition, its coefficient of thermal expansion is too large.

In view of the above state of arts, the sealing glass to be used together with the superstructural nitride alloy should meet at least following requirements:

(1) Its coefficient of thermal expansion is close to that of the superstructural nitride alloy.

(2) Its working temperature is not higher than 600° C.

(3) It has good water resistance.

(4) It is not darkly colored and not devitrified during processing.

As a result of preliminary experiments on the coefficient of thermal expansion and water resistance, it was found that the glass having a coefficient of thermal expansion of from 90 to 110 x $10^{-7}/^{\circ}$C has good sealing properties with the superstructural nitride alloy, and that the glass should have the water resistance of at least "Second Class", preferably "First Class" when expressed according to the classes determined by the Japan Optical Glass Industries Association (Nippon Kogaku Garasu Kogyokai).

## SUMMARY OF THE INVENTION

One object of the present invention is to provide a novel sealing glass which is suitable for sealing electronic parts, magnetic heads or quartz oscillators, in particular the magnetic heads.

Another object of the present invention is to provide a magnetic head comprising the novel sealing glass.

According to the present invention, there are provided a sealing glass which comprises:

10 to 25 % by weight of $SiO_2$,

55 to 80 % by weight of $PbO$,

1 to 15 % by weight of $CdO$,

0 to 10 % by weight of $B_2O_3$,

0 to 5 % by weight of $ZnO$,

0 to 5 % by weight of $Al_2O_3$,

0 to 5 % by weight of $Na_2O$ , and

0 to 10 % by weight of $K_2O$

provided that a total content of $Na_2O$ and $K_2O$ does not exceed 10 % by weight, and a magnetic head comprising said sealing glass.

Preferably, the sealing glass of the present invention comprises:

10 to 20 % by weight of $SiO_2$,

60 to 75 % by weight of $PbO$,

1 to 10 % by weight of $CdO$,

3 to 10 % by weight of $B_2O_3$,

0 to 5 % by weight of $ZnO$,

0 to 3 % by weight of $Al_2O_3$,

0 to 3 % by weight of $Na_2O$ , and

1 to 5 % by weight of $K_2O$

provided that a total content of $Na_2O$ and $K_2O$ is from 1 to 8 % by weight.

The sealing glass of the present invention having the above composition has a coefficient of thermal expansion of from 90 to 110 x $10^{-7}/^{\circ}$ C and improved water resistance and is suitable for sealing the magnetic head, in particular, the magnetic head comprising the superstructural nitride alloy.

## DESCRIPTION OF THE DRAWINGS

Figs. 1A to 1K illustrate the steps for producing the magnetic head.

## DETAILED DESCRIPTION OF THE INVENTION

Table shows the compositions of the glasses of the Sample Nos. 1 to 25 and their properties such as coefficients of thermal expansion, working temperatures, water resistance and total evaluation.

The coefficient of thermal expansion is measured between 30 and 300° C. The working temperature is a tempera ture at which the glass is fully expanded when the glass is drawn to a fiber having a diameter of 1 mm and a length of 25 mm and placed on a piece of ferrite having a width of 2.6 mm and a length of 25 mm. Water resistance is expressed in terms of "Class" determined by the Japan Optical glass Industries Association.

3

Table

| Sample No. | 1 | 2 | 3 | 4 | 5 | 6 | 7 | 8 | 9 | 10 | 11 | 12 | 13 |
|---|---|---|---|---|---|---|---|---|---|---|---|---|---|
| Composition (wt. %) | | | | | | | | | | | | | |
| $SiO_2$ | 5 | 10 | 15 | 20 | 25 | 30 | 18 | 15 | 3 | 10 | 10 | 10 | 10 |
| $B_2O_3$ | 8 | 8 | 8 | 8 | 8 | 8 | | 3 | 15 | 8 | 8 | 8 | 8 |
| PbO | 80 | 75 | 70 | 65 | 60 | 55 | 75 | 75 | 75 | 70 | 65 | 77 | 72 |
| ZnO | | | | | | | | | | 5 | 10 | | |
| $Al_2O_3$ | 2 | 2 | 2 | 2 | 2 | 2 | 2 | 2 | 2 | 2 | 2 | | 5 |
| $Na_2O$ | | | | | | | | | | | | | |
| $K_2O$ | 2 | 2 | 2 | 2 | 2 | 2 | 2 | 2 | 2 | 2 | 2 | 2 | 2 |
| CdO | 3 | 3 | 3 | 3 | 3 | 3 | 3 | 3 | 3 | 3 | 3 | 3 | 3 |
| Coefficient of thermal expansion ($\times 10^{-7}/°C$) | 112 | 104 | 98 | 93 | 89 | 81 | 105 | 105 | 106 | 100 | 88 | 106 | 89 |
| Working temp.(°C) | 500 | 520 | 540 | 560 | 590 | 630 | 560 | 540 | 500 | 530 | 570 | 510 | 580 |
| Water resistance (Class) | 2 | 1 | 1 | 1 | 1 | 1 | 2 | 1 | 3 | 1 | 1 | 1 | 1 |
| Total evaluation | X | OO | OO | OO | O | X | O | OO | X | OO | X | OO | O |

EP 0 435 002 A1

Table (continued)

| Sample No. | 14 | 15 | 16 | 17 | 18 | 19 | 20 | 21 | 22 | 23 | 24 | 25 |
|---|---|---|---|---|---|---|---|---|---|---|---|---|
| **Composition (wt. %)** | | | | | | | | | | | | |
| $SiO_2$ | 10 | 10 | 10 | 10 | 10 | 10 | 10 | 10 | 10 | 10 | 10 | 10 |
| $B_2O_3$ | 8 | 8 | 8 | 8 | 8 | 8 | 8 | 8 | 8 | 8 | 8 | 8 |
| $PbO$ | 67 | 77 | 72 | 67 | 62 | 70 | 65 | 78 | 73 | 68 | 63 | 58 |
| $ZnO$ | 10 | 2 | 2 | 2 | 2 | 2 | 2 | 2 | 2 | 2 | 2 | 2 |
| $Al_2O_3$ | 2 | | | | | 5 | 10 | | | | | |
| $Na_2O$ | | | 5 | 10 | 15 | 2 | 2 | | | | | |
| $K_2O$ | 3 | 3 | 3 | 3 | 3 | 3 | 3 | 2 | 2 | 2 | 2 | 2 |
| $CdO$ | | | | | | | | | 5 | 10 | 15 | 20 |
| Coefficient of thermal expansion ($\times 10^{-7}$/°C) | 86 | 104 | 107 | 111 | 117 | 109 | 114 | 110 | 101 | 92 | 89 | 85 |
| Working temp. (°C) | 630 | 490 | 500 | 480 | 460 | 490 | 470 | 510 | 530 | 570 | 600 | 640 |
| Water resistance (Class) | 1 | 2 | 1 | 2 | 3 | 2 | 3 | 2 | 1 | 1 | 1 | 1 |
| Total evaluation | X | O | OO | O | X | O | X | O | OO | OO | O | X |

In the Sample Nos. 1 to 6, contents of $SiO_2$ and PbO were changed. As the content of $SiO_2$ decreased, the coefficient of thermal expansion increased and the water resistance became worse. When the content of $SiO_2$ increased, the coefficient of thermal expansion decreased and the working temperature exceeded 600°C.

In the Sample Nos. 7, 8 and 9, a content of $B_2O_3$ was changed. When the content of $B_2O_3$ was too small or too large, the water resistance was deteriorated.

In the Sample Nos. 10 and 11, a content of ZnO was changed. When this content was too large, the coefficient of thermal expansion was too small.

In the Sample Nos. 12, 13 and 14, a content of $Al_2O_3$ was changed. When this content was too large, the coefficient of thermal expansion was too small, and the working temperature exceeded 600°C.

In the Sample Nos. 15 to 18, a content of $K_2O$ was changed. When this content was too large, the coefficient of thermal expansion was too large, and the water resistance was deteriorated.

In the Sample Nos. 19 and 20, a content of $Na_2O$ was changed. When this content was too large, the water resistance was deteriorated.

As understood from the results of the Sample Nos. 15 to 20, when the total content of $Na_2O$ and $K_2O$ exceeded 10 % by weight, the coefficient of thermal expansion was too large and the water resistance was deteriorated.

In the Sample Nos. 21 to 25, a content of CdO was changed. When this content was too large, the coefficient of thermal expansion was too large, and the working temperature exceeded 600°C.

The sealing glass of the present invention has the coefficient of thermal expansion of from 90 to 110 x $10^{-7}/°C$ and improved water resistance. To the sealing glass, $As_2O_3$ for refining or other conventionally used material(s) may be added in a small amount.

The glass of the present invention is preferably used to seal the magnetic head. Also the glass of the present invention can be used to seal metals having the close coefficient of thermal expansion (e.g. platinum, titanium, chromium-iron alloys, 426 alloy, etc.) or other glasses (soda ash glass, lead-potassium glass, borosilicate glass, etc.) and can be used to adhere a CRT tube or as an IC package, a hermetic seal or a sheathed heater.

## Claims

1. A sealing glass which comprises:
   10 to 25 % by weight of $SiO_2$,
   55 to 80 % by weight of PbO,
   1 to 15 % by weight of CdO,
   0 to 10 % by weight of $B_2O_3$,
   0 to 5 % by weight of ZnO,
   0 to 5 % by weight of $Al_2O_3$,
   0 to 5 % by weight of $Na_2O$ , and
   0 to 10 % by weight of $K_2O$
   provided that a total content of $Na_2O$ and $K_2O$ does not exceed 10 % by weight.

2. The sealing glass according to claim 1, which comprises:
   10 to 20 % by weight of $SiO_2$,
   60 to 75 % by weight of PbO,
   1 to 10 % by weight of CdO,
   3 to 10 % by weight of $B_2O_3$,
   0 to 5 % by weight of ZnO,
   0 to 3 % by weight of $Al_2O_3$,
   0 to 3 % by weight of $Na_2O$ , and
   1 to 5 % by weight of $K_2O$
   provided that a total content of $Na_2O$ and $K_2O$ is from 1 to 8 % by weight.

3. The sealing glass according to claim 1 or 2, which is used for sealing a magnetic head.

4. A magnetic head comprising a ferrite body and a sealing glass which comprises:
   10 to 25 % by weight of $SiO_2$,
   55 to 80 % by weight of PbO,
   1 to 15 % by weight of CdO,
   0 to 10 % by weight of $B_2O_3$,
   0 to 5 % by weight of ZnO,
   0 to 5 % by weight of $Al_2O_3$,
   0 to 5 % by weight of $Na_2O$ , and
   0 to 10 % by weight of $K_2O$
   provided that a total content of $Na_2O$ and $K_2O$ does not exceed 10 % by weight, and a magnetic head comprising said sealing glass for bonding or filling parts of the ferrite body.

5. The magnetic head according to claim 4, wherein the sealing glass comprises:
   10 to 20 % by weight of $SiO_2$,
   60 to 75 % by weight of PbO,
   1 to 10 % by weight of CdO,
   3 to 10 % by weight of $B_2O_3$,
   0 to 5 % by weight of ZnO,
   0 to 3 % by weight of $Al_2O_3$,
   0 to 3 % by weight of $Na_2O$ , and
   1 to 5 % by weight of $K_2O$
   provided that a total content of $Na_2O$ and $K_2O$ is from 1 to 8 % by weight.

Fig.1A  Fig.1B  Fig.1C  Fig.1D

Fig.1E  Fig.1F  Fig.1G  Fig.1H

Fig.1I  Fig.1J  Fig.1K

EP 0 435 002 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3723835 (DAVIS) <br> * claim 1 * | 1-3 | C03C8/24 <br> C03C3/072 |
| X | US-A-2245541 (GOODWIN) <br> * claim 7 * | 1-3 | |
| X | GB-A-1103078 (DU PONT DE NEMOURS) <br> * claim 10 * | 1-3 | |
| X | CHEMICAL ABSTRACTS, vol. 95, no. 20, 16 November 1981 <br> Columbus, Ohio, USA <br> page 316; ref. no. 174234F <br> & SU-A-833615 (SSRIG) (30-05-81) <br> * abstract * | 1-3 | |
| A | CHEMICAL ABSTRACTS, vol. 111, no. 6, 07 August 1989 <br> Columbus, Ohio, USA <br> page 308; ref. no. 44189H <br> & JP-A-1009833 (MATSUSHITA EL.IND.) (13-01-89) <br> * abstract * | 1-5 | |

TECHNICAL FIELDS SEARCHED (Int. Cl.5)

C03C

The present search report has been drawn up for all claims

| Place of search | Date of completion of the search | Examiner |
|---|---|---|
| THE HAGUE | 27 FEBRUARY 1991 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)